(19) Europäisches Patentamt
European Patent Office
Office européen des brevets

(11) EP 4 765 289 A1

(12) # EUROPEAN PATENT APPLICATION

published in accordance with Art. 153(4) EPC

(43) Date of publication:
**24.06.2026 Bulletin 2026/26**

(21) Application number: **24865407.1**

(22) Date of filing: **09.09.2024**

(51) International Patent Classification (IPC):
***H01M 10/0565** (2010.01)* ***H01G 11/56** (2013.01)*
***H01G 11/60** (2013.01)* ***H01G 11/62** (2013.01)*
***H01M 6/18** (2006.01)* ***H01M 10/052** (2010.01)*
***H01M 10/054** (2010.01)*

(52) Cooperative Patent Classification (CPC):
**H01G 11/56; H01G 11/60; H01G 11/62; H01M 6/18; H01M 10/052; H01M 10/054; H01M 10/0565;**
Y02E 60/10

(86) International application number:
**PCT/JP2024/032246**

(87) International publication number:
**WO 2025/057907 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.09.2023 JP 2023147772**

(71) Applicant: **SUMITOMO CHEMICAL COMPANY, LIMITED**
**Tokyo 103-6020 (JP)**

(72) Inventors:
- **NAKAJIMA Hideto**
  **Niihama-shi, Ehime 792-8521 (JP)**
- **ATTANZIO Antonio**
  **Niihama-shi, Ehime 792-8521 (JP)**

(74) Representative: **Vossius & Partner Patentanwälte Rechtsanwälte mbB**
**Siebertstraße 3**
**81675 München (DE)**

(54) **ELECTROLYTE COMPOSITION AND BATTERY**

(57) The present disclosure provides an electrolyte composition including a polymer having an ability to preferentially conduct alkali metal ions, an alkali metal salt, a film-forming additive, and an organic solvent.

***Fig.1***

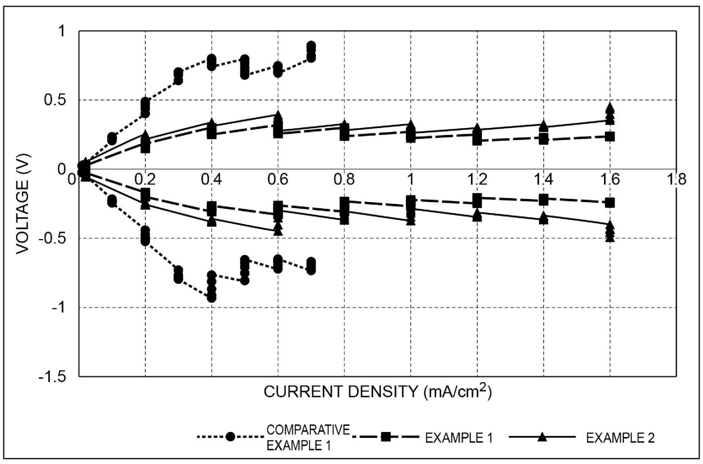


EP 4 765 289 A1

## Description

### Technical Field

The present disclosure relates to an electrolyte composition and a battery.

### Background Art

Batteries that perform charging and discharging accompanying the movement of metal ions between a positive electrode and a negative electrode, such as lithium-ion batteries, have been actively researched due to their high capacity. As electrolytes for lithium-ion batteries and the like, solutions of lithium salts including an organic solvent or an ionic liquid have been known in the related art. On the other hand, research on solid electrolytes, polymer electrolytes, and the like has been advanced from the viewpoints of safety and processability (Patent Literature 1 or 2). In addition to lithium-ion batteries, research has also been advanced on batteries using other alkali ions such as sodium and potassium, which have a larger abundance than lithium.

### Citation List

### Patent Literature

[Patent Literature 1] International Publication No. WO 2007/125845
[Patent Literature 2] Japanese Unexamined Patent Application Publication No. 2021-88695

### Summary of Invention

### Technical Problem

Polymer electrolytes, compared to solid electrolytes, generally tend to have lower contact resistance with electrodes because they easily adhere to the electrodes. However, as a result of diligent studies by the present inventors, it has been found that there is room for improvement in the resistance between the electrode and the electrolyte interface.
The present disclosure has been made in view of the above-described circumstances, and an object thereof is to provide an electrolyte composition capable of passing a sufficiently large current at a low voltage, and a battery including the electrolyte composition.

### Solution to Problem

The present disclosure includes the following exemplary embodiments.

[1] An electrolyte composition, including: a polymer having an ability to preferentially conduct alkali metal ions; an alkali metal salt; a film-forming additive; and an organic solvent.
[2] The electrolyte composition of [1], wherein a transference number of the alkali metal ions is 0.5 or more.
[3] The electrolyte composition of [1] or [2], wherein the alkali metal salt is a lithium salt and/or a sodium salt.
[4] The electrolyte composition of any one of [1] to [3], wherein the organic solvent is one or more solvents selected from the group consisting of a carbonate-based solvent, an ether-based solvent, a fluorine-based solvent, a nitrile-based solvent, a lactone-based solvent, a phosphate ester-based solvent, and a sulfone-based solvent.
[5] The electrolyte composition of any one of [1] to [4], wherein the polymer having an ability to preferentially conduct alkali metal ions includes one or more groups selected from the group consisting of an alkali-metallized sulfonylimide group, an alkali-metallized sulfonic acid group, an alkali-metallized carboxylic acid group, and an alkali-metallized phenolic hydroxyl group.
[6] A battery, including the electrolyte composition of any one of [1] to [5].

### Advantageous Effects of Invention

According to the contents of the present disclosure, it is possible to provide an electrolyte composition capable of passing a sufficiently large current at a low voltage, and a battery including the electrolyte composition.

## Brief Description of Drawings

[FIG. 1] FIG. 1 is a diagram showing a relationship between current density and voltage value in a lithium dissolution-deposition test of Comparative Example 1, Example 1, and Example 2.

## Description of Embodiments

The electrolyte composition of the present embodiment includes a polymer having an ability to preferentially conduct alkali metal ions, an alkali metal salt, a film-forming additive, and an organic solvent.

The electrolyte composition can pass a sufficiently large current at a low voltage by including the polymer, the alkali metal salt, the film-forming additive, and the organic solvent. Although the reason why such an effect is obtained is not necessarily clear, the present inventors presume as follows. It is known that in a battery, a film derived from an organic solvent is formed on the surface of an electrode as the battery is driven. When a related-art polymer electrolyte is used, the polymer electrolyte is difficult to be incorporated into the film, and the ionic conductivity of the film portion becomes low. Therefore, the resistance at the interface between the electrode and the electrolyte increases, and it has been necessary to increase the voltage to pass a sufficient current. In contrast, in the electrolyte composition according to the present embodiment, by using the polymer in combination with the alkali metal salt and the film-forming additive, when the film-forming additive and the organic solvent are decomposed by an electrolytic reaction to form a film on the electrode surface, the polymer and the alkali metal salt can be partially incorporated, whereby alkali metal ions can be supplied into the film to increase the ionic conductivity, and the resistance at the interface between the electrode and the electrolyte can be lowered and the transference number of the alkali metal ions can be increased. As a result, it has become possible to lower the voltage for passing a sufficient current.

In the present specification, in any case, examples of the "substituent" can include both an organic group and a group other than an organic group (an inorganic group). In the present specification, the "organic group" refers to a group having a chemical structure obtained by removing at least one hydrogen atom from an organic compound. In the present specification, the term "organic group", in any case, regardless of the valence of the organic group, can exemplify a hydrocarbon group or a group in which a part of carbon atoms of a hydrocarbon group is replaced by a heteroatom, a group in which at least one or more hydrogen atoms of a hydrocarbon group or a group in which a part of carbon atoms of a hydrocarbon group is replaced by a heteroatom are substituted by a substituent, and the like. When the organic group has a ring structure, the ring may be either a heterocyclic ring or a carbocyclic ring, and may be either a monocyclic ring or a condensed ring. In the present specification, in any case, the hydrocarbon group can be exemplified by both an aliphatic hydrocarbon group and an aromatic hydrocarbon group. In the present specification, in any case, the aliphatic hydrocarbon group can be exemplified by any of a linear hydrocarbon group, a branched hydrocarbon group, and a cyclic hydrocarbon group. In addition, in the present specification, in any case, the hydrocarbon group can be exemplified by both a saturated hydrocarbon group and an unsaturated hydrocarbon group. In the present specification, the aromatic hydrocarbon group shall be a hydrocarbon group having an aromatic portion such as a benzene ring, and may have an aliphatic portion. In addition, in the present specification, the cyclic hydrocarbon group shall be a hydrocarbon group having an aliphatic carbocyclic portion, and may have a linear or branched aliphatic portion. The heteroatom that substitutes for the carbon atom is not particularly limited, but examples thereof include a boron atom, an oxygen atom, a nitrogen atom, a silicon atom, a phosphorus atom, and a sulfur atom. Specifically, the organic group may include a linking group including a heteroatom such as -O- (ether bond), -S- (thioether bond), a sulfonyl group, a sulfinyl group, a secondary amino group, and a tertiary amino group. In the present specification, in any case, specific examples of the organic group include a substituted or unsubstituted hydrocarbon group, a group having a chemical structure formed by substituting one or more carbon atoms (methylene groups) in a hydrocarbon group with a linking group including a heteroatom such as -O- (ether bond), -S- (thioether bond), -C(=O)- or -C(=O)O-, -C(=O)NR- (R is a monovalent organic group) (the linking group may be a divalent linking group), or a group in which a hydrogen atom of the group is substituted by a substituent such as a halogen atom, a group having a heterocyclic ring, and the like. In the present specification, in any case, examples of the inorganic group can include both an electron-withdrawing group and an electrondonating group, and specific examples thereof include a halogen atom, $-NH_2$, $-NH_3^+$, -CN, a sulfonic acid group and a salt or ester thereof, $-NO_2$, and the like.

< Polymer Having Ability to Preferentially Conduct Alkali Metal Ions >

The polymer having an ability to preferentially conduct alkali metal ions (hereinafter, also simply referred to as a polymer) may be one that satisfies at least one of the following conditions (A) and (B). The polymer may be simply referred to as a polymer having an ability to conduct alkali metal ions.

(A) When the transference number of the alkali metal ions at room temperature (25°C) is measured for a composition including 33% by mass of the polymer and 67% by mass of a non-ionic plasticizer, the transference number of the alkali

metal ions is 0.4 or more.

(B) When the transference number of the alkali metal ions at room temperature (25°C) is measured for a composition including 31.9% by mass of the polymer, an alkali metal salt, and the remaining total amount of a non-ionic plasticizer, and having an alkali metal ion concentration of 0.3 mol/L, the transference number of the alkali metal ions is 0.4 or more.

For (A) and (B), the transference number of the alkali metal ions may be, for example, 0.5 or more, 0.6 or more, or 0.7 or more. The transference number of the alkali metal ions may be, for example, 0.9 or less.

The alkali metal ions included in the alkali metal salt included in the composition may be the same ions as the counter cation of the anionic functional group when the polymer has an anionic functional group. The alkali metal salt may be a bis(trifluoromethanesulfonyl)imide salt (TFSI salt).

Examples of the non-ionic plasticizer include at least one of an organic solvent and other resins such as a fluorine-based resin.

The organic solvent may be an aprotic solvent. The aprotic solvent may be at least one selected from the group consisting of a carbonate-based solvent, a fluorine-based solvent, and an ether-based solvent. The organic solvent may be a mixed solvent of ethylene carbonate and propylene carbonate (1:1 by volume ratio).

As the fluorine-based resin, a resin having a carbon chain as a main chain is preferable. The carbon chain may be one formed by radical polymerization of an ethylenically unsaturated group. The fluorine-based resin may be PVDF-HFP.

The polymer may include at least one of a structural unit having an anionic functional group and an alkali metal ion as a counter cation of the anionic functional group (hereinafter, also referred to as structural unit (A)) and a structural unit having a functional group that functions as an anion receptor (hereinafter, also referred to as structural unit (B)). The polymer may have one or more types of structural units (A). In addition, the polymer may have one or more types of structural units (B).

The polymer may include, as an alkali-metallized group, one or more groups selected from the group consisting of an alkali-metallized sulfonylimide group, an alkali-metallized sulfonic acid group, an alkali-metallized carboxylic acid group, and an alkali-metallized phenolic hydroxyl group.

Here, in the present specification, the alkali-metallized group refers to a group in which an anionic functional group, which is a conjugate base of the acid form of the group, forms a salt with an alkali metal ion. Specific examples thereof include an alkali-metallized sulfonylimide group, an alkali-metallized sulfonic acid group, an alkali-metallized carboxylic acid group, and an alkali-metallized phenolic hydroxyl group. The alkali-metallized sulfonylimide group refers to a - $SO_2$-NA-$SO_2$- group ([-$SO_2$-N-$SO_2$-]-$A^+$ group) in which H of a sulfonylimide acid group (-$SO_2$-NH-$SO_2$- group) is substituted with an alkali metal element A. The alkali-metallized sulfonic acid group refers to a -$SO_3$A group ([-$SO_3$]-$A^+$ group) in which H of a sulfonic acid group (-$SO_3$H group) is substituted with an alkali metal element A. The alkali-metallized carboxylic acid group refers to a -COOA group ([-COO]-$A^+$ group) in which H of a carboxylic acid group (-COOH group) is substituted with an alkali metal element A. The alkali-metallized phenolic hydroxyl group refers to an -OA group (-O-$A^+$ group) in which H of a -OH group, which is a phenolic hydroxyl group, is substituted with an alkali metal element A.

The structure of the polymer is not particularly limited, but examples thereof include one having a carbon chain as a main chain, and the carbon chain may be one formed by radical addition polymerization of a monomer having an ethylenically unsaturated group.

The alkali metal element A may include at least one selected from the group consisting of lithium, sodium, potassium, rubidium, and cesium, may include at least one selected from the group consisting of lithium, sodium, and potassium, may include at least one of lithium and sodium, may include lithium, and may be lithium.

The content of one type of alkali metal element among the alkali metal elements included in the polymer may be, for example, 80 mol% or more, 85 mol% or more, or 90 mol% or more. The one type of alkali metal element may be potassium, sodium, or lithium, may be sodium or lithium, and may be lithium.

The structural unit (A) may include at least one of a structural unit represented by the following formula (A1) and a structural unit represented by (A2).

[Chem. 1]

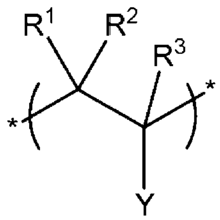

(A1)

(In formula (A1), Y is an alkali-metallized monovalent group. $R^1$ to $R^3$ are each independently a hydrogen atom or a monovalent substituent, or one of $R^1$ and $R^2$ forms a ring together with $R^3$, and the other is a hydrogen atom or a monovalent substituent. $R^1$ to $R^3$ may have the alkali-metallized group.)

[Chem. 2]

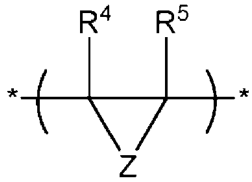

(A2)

(In formula (A2), Z is an alkali-metallized divalent group. $R^4$ and $R^5$ are each independently a hydrogen atom or a monovalent substituent, or $R^4$ and $R^5$ form a ring together. $R^4$ and $R^5$ may have the alkali-metallized group.)

Note that a structure excluding $R^1$ to $R^3$ and Y in formula (A1) and a structure excluding $R^4$, $R^5$, and Z in formula (A2) are also simply referred to as an ethylene unit.

In formula (A1), Y may include one or more groups selected from the group consisting of an alkali-metallized sulfonylimide group, an alkali-metallized sulfonic acid group, an alkali-metallized carboxylic acid group, and an alkali-metallized phenolic hydroxyl group, and may include one or more groups selected from the group consisting of an alkali-metallized sulfonic acid group, an alkali-metallized carboxylic acid group, and an alkali-metallized phenolic hydroxyl group. One or more types of functional groups may be adopted as Y.

In formula (A1), the monovalent substituent as $R^1$ to $R^3$ may be a monovalent organic group. When $R^1$ to $R^3$ are monovalent substituents, examples of the substituent include a monovalent organic group. The number of carbon atoms that the monovalent organic group has may be, for example, 1 to 20, 1 to 15, 1 to 10, 1 to 5, or 1 to 3. At least one of $R^1$ to $R^3$ may be a hydrogen atom, and all of them may be hydrogen atoms. Examples of the monovalent organic group include a methyl group.

In formula (A1), when one of $R^1$ and $R^2$ forms a ring together with $R^3$, $R^1$ or $R^2$ and $R^3$ form a divalent substituent that respectively bonds with the two carbons of the ethylene unit of formula (A1). In formula (A2), when $R^4$ and $R^5$ form a ring together, $R^4$ and $R^5$ form a divalent substituent that respectively bonds with the two carbons of the ethylene unit of formula (A2). These rings may be either a carbocyclic ring or a heterocyclic ring. The number of ring members of these rings may be 4 to 10, or 5 to 8, and may be 5 or 6. A substituent may be bonded to a carbon atom or a heteroatom that is a ring member.

In formula (A1), when Y includes an alkali-metallized carboxylic acid group (-COOA group, where A is an alkali metal), Y may be a - COOA group itself, but may be a monovalent organic group having a - COOA group. When Y is a monovalent organic group, the number of carbon atoms that the organic group has may be, for example, 1 to 20, 1 to 15, 1 to 10, 1 to 5, or 1 to 3. The monovalent organic group may have one or a plurality of -COOA groups, and may have one -COOA group. Y may have an electron-withdrawing group such as a halogen atom in addition to the -COOA group.

In formula (A1), Y may be a group represented by $-R^9$-COOA. Here, $R^9$ is a divalent organic group or a covalent bond. The number of carbon atoms that the divalent organic group has may be, for example, 1 to 19, 1 to 14, 1 to 9, 1 to 4, or 1 or 2.

In formula (A1), when Y has an alkali-metallized phenolic hydroxyl group, Y may be a group having one or a plurality of -OA groups (A is an alkali metal element) directly bonded to a carbon atom that is a ring member of an aromatic ring such as a benzene ring, a naphthalene ring, or an anthracene ring. Another ring structure may be condensed to the

aromatic ring. For example, Y may have a group represented by any one of the following formulas (A21) to (A26). Y may be directly covalently bonded to a carbon atom of the ethylene unit of formula (A1), or may be bonded via a linking group (for example, a divalent linking group).

[Chem. 3]

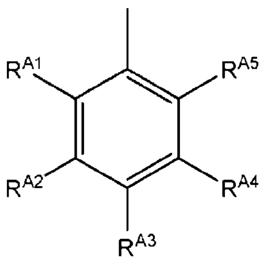

(A21)

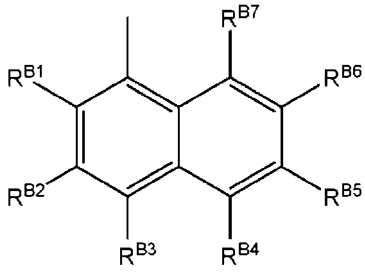

(A22)

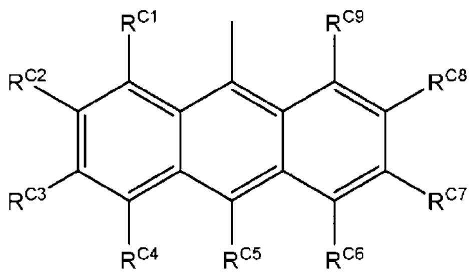

(A23)

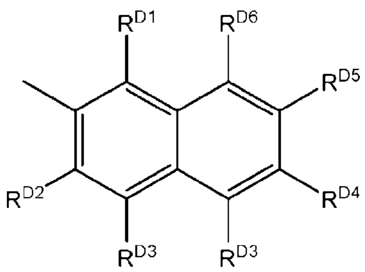

(A24)

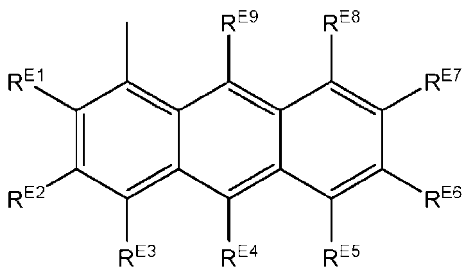

(A25)

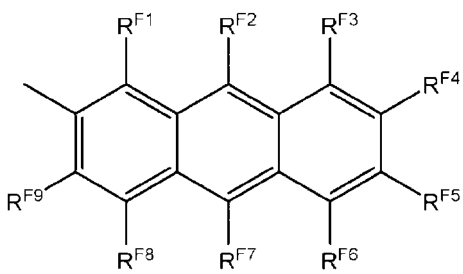

(A26)

(In formula (A21), at least one of the $R^{A1}$ to $R^{A5}$ groups is an -OA group, and the rest are a hydrogen atom or a monovalent substituent. The $R^{A3}$ group may be an -OA group. $R^{A2}$ and $R^{A4}$ or $R^{A1}$, $R^{A2}$, $R^{A4}$, and $R^{A5}$ are each independently a hydrogen atom, an -OA group, a methyl group, an ethyl group, or a monovalent organic group having 1 to 20 carbon atoms (provided that when the monovalent organic group is a saturated hydrocarbon group, it is a methyl group, an ethyl group, or a group having 6 to 20 or 6 to 15 carbon atoms, and when the monovalent organic

group is an alkoxy group, it is a group having 4 to 20 or 4 to 15 carbon atoms).)

In formula (A22), at least one of the $R^{B1}$ to $R^{B7}$ groups is an -OA group, and the rest are a hydrogen atom or a monovalent substituent. At least one of the $R^{B3}$ to $R^{B6}$ groups may be an -OA group.

In formula (A23), at least one of the $R^{C1}$ to $R^{C9}$ groups is an -OA group, and the rest are a hydrogen atom or a monovalent substituent. At least one of the $R^{C2}$ to $R^{C8}$ groups may be an -OA group.

In formula (A24), at least one of the $R^{D1}$ to $R^{D6}$ groups is an -OA group, and the rest are a hydrogen atom or a monovalent substituent. At least one of the $R^{D3}$ to $R^{D6}$ groups may be an -OA group.

In formula (A25), at least one of the $R^{E1}$ to $R^{E9}$ groups is an -OA group, and the rest are a hydrogen atom or a monovalent substituent. At least one of the $R^{E2}$ to $R^{E8}$ groups may be an -OA group.

In formula (A26), at least one of the $R^{F1}$ to $R^{F9}$ groups is an -OA group, and the rest are a hydrogen atom or a monovalent substituent. At least one of the $R^{F1}$ to $R^{F9}$ groups may be an -OA group.)

The group represented by formulas (A21) to (A26) may have 1 to 3 -OA groups, may have 1 or 2 -OA groups, and may have one -OA group.

In formulas (A21) to (A26), the monovalent substituent is preferably an electron-withdrawing group. Examples of the electron-withdrawing group include a halogen atom, a sulfonic acid group or a salt thereof, a sulfonic acid ester, a nitro group, and a nitrile group. The halogen atom may be any of F, Cl, Br, and I.

In addition, in formulas (A21) to (A26), the monovalent substituent may be an organic group having 1 to 20 carbon atoms. The number of carbon atoms that the organic group has may be, for example, 1 to 15, 1 to 10, 1 to 5, or 1 to 3.

In formula (A1), when Y is an alkali-metallized sulfonic acid group, examples of Y include a group represented by the following formula (A3).

[Chem. 4]

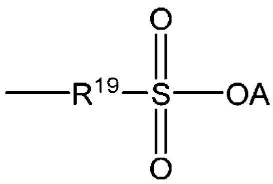

(A3)

(In formula (A3), $R^{19}$ is a covalent bond or a divalent organic group. A is an alkali metal element.)

In formula (A3), the number of carbon atoms that the divalent organic group has may be, for example, 1 to 20, 1 to 15, 1 to 10, 1 to 5, or 1 to 3.

Examples of the alkali-metallized sulfonic acid group include - $SO_3A$, $-CH_2-SO_3A$, $-C_6H_4-SO_3A$, and the like.

The structural unit (A2) may be a group including a maleimide ring having an alkali-metallized group, and examples thereof include the following structural unit (A4).

[Chem. 5]

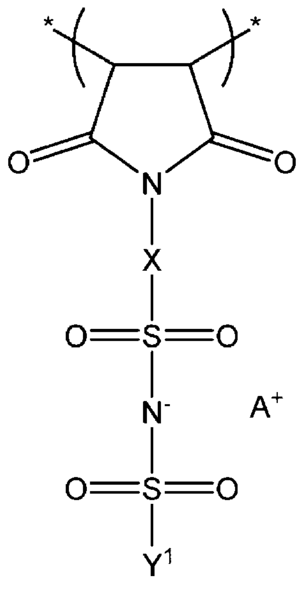

(A4)

(In formula (A4), X is a divalent organic group having 1 to 20 carbon atoms, $Y^1$ is a halogen atom or a monovalent organic group having 1 to 20 carbon atoms, $A^+$ is an alkali metal ion, and * represents a position where the structural unit (A4) bonds to another structural unit.)

In formula (A4), the number of carbon atoms that X has may be, for example, 1 to 15, 2 to 10, or 3 to 8.

In formula (A4), the hydrocarbon group as X may be a phenylene group, an alkylene group having 1 to 8 carbon atoms, a polyoxyalkylene group, or a group in which a part or all of hydrogen atoms bonded to carbon atoms thereof are substituted with a halogen atom such as a fluorine atom, may be a divalent group having a substituted or unsubstituted phenylene group, and may be a phenylene group or a substituted phenylene group. The substituted phenylene group means a functional group in which at least a part of hydrogen atoms constituting the phenylene group is substituted with an alkyl group, a halogen atom, an electron-withdrawing group, or the like.

In formula (A4), when $Y^1$ is a monovalent organic group, the number of carbon atoms that $Y^1$ has may be, for example, 1 to 15, 1 to 10, 1 to 8, 1 to 5, or 1 to 3. In formula (A4), the hydrocarbon group as $Y^1$ may be a phenyl group, an alkyl group having 1 to 5 carbon atoms, or one in which a part or all of hydrogen atoms bonded to carbon atoms of these groups are substituted with a halogen atom such as a fluorine atom, may be a fluorinated alkyl group having 1 to 5 carbon atoms, and may be a fluorinated alkyl group having 1 to 3 carbon atoms such as a trifluoromethyl group. The fluorinated alkyl group may be a perfluorinated alkyl group. When $Y^1$ is a halogen atom, the halogen atom may be a fluorine atom or a chlorine atom, and may be a fluorine atom.

The structural unit (B) has a function as an anion receptor. The anion receptor refers to a chemical species that captures an anion by forming an electrostatic interaction, a hydrogen bond, an acid-base complex, or the like with the anion. The structural unit (B) captures a counter anion of an alkali metal ion in an alkali metal salt and promotes dissociation between the counter anion and the alkali metal ion. As a result, the mobility of the alkali metal ions increases. On the other hand, since the counter anion is captured by the polymer via the structural unit (B), the mobility of the counter anion decreases. As a result, it is considered that the transference number of the alkali metal ions is improved. In addition, since the mobility of alkali metal ions increases, the conductivity of alkali metal ions also tends to improve. Lowmolecular-weight chemical species (compounds and the like) that function as anion receptors are known, and examples thereof include compounds described in U.S. Patent No. 6,022,643, U.S. Patent No. 5,705,689, U.S. Patent No. 6,120,941, and the like.

The functional group having a function as an anion receptor may have Lewis acidity. In this case, the functional group can capture an anion by accepting a non-covalent electron pair of the anion and forming an acid-base complex. Examples of such a functional group include a functional group having an electron-deficient atom. Note that the electron-deficient atom refers to an atom that is covalently bonded to another atom but whose outermost shell electrons do not form an octet. Examples of the electron-deficient atom include an atom belonging to Group 13 of the periodic table, and more specifically, may be at least one of aluminum and boron, and may be boron.

In addition, the functional group having a function as an anion receptor may be a group having an azaether moiety. The group having an azaether moiety is a group having an azaether compound as a substituent, and the azaether

compound is a compound in which -O- of an ether compound is replaced with -NRE- (where RE is a hydrogen atom or an organic group). The azaether moiety may be either a linear azaether moiety or a cyclic azaether moiety, and may have both a linear azaether moiety and a cyclic azaether moiety. The group having an azaether moiety may have an electron-withdrawing group, for example, in a hydrocarbon moiety or the like.

The structural unit (B) may include at least one type of structural unit represented by the following formula (B).

[Chem. 6]

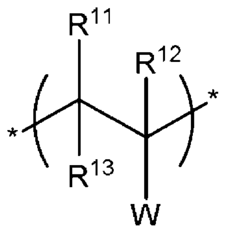

(B)

(In formula (B), W is a functional group having a function as an anion receptor, $R^{11}$ to $R^{13}$ are each independently a hydrogen atom or a monovalent substituent, or one of $R^{11}$ and $R^{13}$ forms a ring together with $R^{12}$, and the other is a hydrogen atom or a monovalent substituent. * represents a position where the structural unit (B) bonds to another structural unit. One or more of $R^{11}$ to $R^{13}$ may be a hydrogen atom, and all of them may be hydrogen atoms.)

Note that a structure excluding $R^{11}$ to $R^{13}$ and W in formula (B) is also simply referred to as an ethylene unit.

In formula (B), when $R^{11}$ to $R^{13}$ are monovalent substituents, the monovalent substituent may be a monovalent organic group. The number of carbon atoms that the organic group has may be, for example, 1 to 20, 1 to 15, 1 to 10, 1 to 5, or 1 to 3.

The monovalent substituent may have an electron-withdrawing group, and may be an electron-withdrawing group itself. The electron-withdrawing group may be bonded to the monovalent organic group, and the monovalent organic group may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

In formula (B), when one of $R^{11}$ and $R^{13}$ forms a ring together with $R^{12}$, $R^{11}$ or $R^{12}$ and $R^{13}$ form a divalent substituent that respectively bonds with the two carbons of the ethylene unit of formula (B). These rings may be either a carbocyclic ring or a heterocyclic ring. The number of ring members of these rings may be, for example, 4 to 10, 5 to 8, or 5 or 6. A substituent may be bonded to a carbon atom or a heteroatom that is a ring member.

In formula (B), W preferably has a group represented by the following formula (B1).

[Chem. 7]

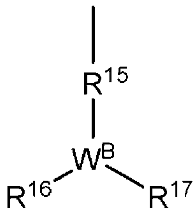

(B1)

(In formula (B1), $W^B$ is an atom belonging to Group 13 of the periodic table, $R^{15}$ is a covalent bond or a divalent organic group, and $R^{16}$ and $R^{17}$ are each independently a hydrogen atom, a -OH group, a halogen atom, or a monovalent organic group, or form a ring together. $R^{16}$ and $R^{17}$ may be the same group or different groups.)

$W^B$ may be at least one of an aluminum atom and a boron atom, and may be a boron atom.

In formula (B1), when $R^{15}$ is a divalent organic group, the number of carbon atoms that the divalent organic group has may be, for example, 1 to 20, 1 to 15, 1 to 10, 1 to 5, or 1 to 3. The divalent organic group may be a hydrocarbon group, a halogen-substituted hydrocarbon group, or a group in which a hydrocarbon group or a halogen-substituted hydrocarbon group is bonded to $W^B$ via an ether bond. The halogen-substituted hydrocarbon group may be one in which a part or all of hydrogen atoms of a hydrocarbon group are substituted with a halogen atom, and may be a partially fluorine-substituted hydrocarbon group or a perfluoro-substituted hydrocarbon group. $R^{15}$ may be a covalent bond.

In formula (B1), when $R^{16}$ or $R^{17}$ is a halogen atom, $R^{16}$ or $R^{17}$ may be any of a fluorine atom, a chlorine atom, a bromine atom, and an iodine atom, and may be a fluorine atom.

In formula (B1), when $R^{16}$ or $R^{17}$ is a monovalent organic group, the number of carbon atoms that the monovalent

organic group has may be, for example, 1 to 20, 1 to 15, 1 to 10, 1 to 5, or 1 to 3. In formula (B1), $R^6$ or $R^7$ may be a hydrocarbon group, a halogen-substituted hydrocarbon group, or a group in which a hydrocarbon group or a halogen-substituted hydrocarbon group is bonded to $W^B$ via an ether bond. The halogen-substituted hydrocarbon group may be one in which a part or all of hydrogen atoms of a hydrocarbon group are substituted with a halogen atom, and may be a partially fluorine-substituted hydrocarbon group or a perfluoro-substituted hydrocarbon group.

The group represented by formula (B1) may be a group represented by the following formula (Bla) or a group represented by the following formula (B1b).

[Chem. 8]

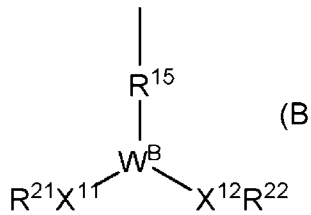

(B1a)

(In formula (B1a), $R^{15}$ is a covalent bond or a divalent organic group, and $X^{11}$ and $X^{12}$ are each independently an oxygen atom or a covalent bond. When $X^{11}$ is a covalent bond, $R^{21}$ is a hydrogen atom, a halogen atom, or a monovalent organic group. When $X^{11}$ is an oxygen atom, $R^{21}$ is a hydrogen atom or a monovalent organic group. When $X^{12}$ is a covalent bond, $R^{22}$ is a hydrogen atom, a halogen atom, or a monovalent organic group. When $X^{12}$ is an oxygen atom, $R^{22}$ is a hydrogen atom, a halogen atom, or a monovalent organic group. When $X^{11}$ and $X^{12}$ are each an oxygen atom, they may be an oxygen atom forming an ether bond.)

[Chem. 9]

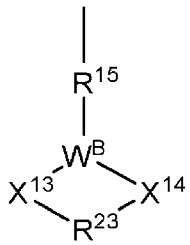

(B1b)

(In formula (B1b), $R^{15}$ is a covalent bond or a divalent organic group, $X^{13}$ and $X^{14}$ are each an oxygen atom or a covalent bond, and $R^{23}$ is a divalent organic group.)

In formula (B1a), when $R^{21}$ or $R^{22}$ is a monovalent organic group, the monovalent organic group may be a monovalent hydrocarbon group or a monovalent halogen-substituted hydrocarbon group. The number of carbon atoms that the monovalent organic group has may be, for example, 1 to 20, 1 to 15, 1 to 10, 1 to 5, or 1 to 3. The halogen-substituted hydrocarbon group may be one in which a part or all of hydrogen atoms of a hydrocarbon group are substituted with a halogen atom, and may be a partially fluorine-substituted hydrocarbon group or a perfluoro-substituted hydrocarbon group. When $R^{21}$ or $R^{22}$ is a halogen atom, the halogen atom may be a fluorine atom.

In formula (B1a), $R^{21}$ and $R^{22}$ are each independently -F, $-CH_3$, $- C_2H_5$, $-C_3H_7$, $-C_6H_5$ (phenyl group), $-C_6H_nF_{5-n}$ (n is an integer of 0 to 4, and may be an integer of 0 to 3), $-CF_3$, $-CH_2CF_3$, $-CH_2CF_3F_7$, $-CH(CF_3)_2$, $-C(CF_3)_2-C_6H_5$, $-C(CF_3)_3$, $-C_6H_n(CF_3)_{5-n}$ (n is an integer of 0 to 4, and may be 1 or 2).

In formula (B1b), the number of carbon atoms that the divalent organic group has may be, for example, 1 to 20, 1 to 15, 2 to 10, or 3 to 8. The divalent organic group may be a hydrocarbon group or a halogen-substituted hydrocarbon group. The halogen-substituted hydrocarbon group may be one in which a part or all of hydrogen atoms of a hydrocarbon group are substituted with a halogen atom, and may be a partially fluorine-substituted hydrocarbon group or a perfluoro-substituted hydrocarbon group.

In formula (B1b), examples of $R^{23}$ include $-C_2H_4-$, $-C_3H_6-$, $- C_4H_8-$, $-C_5H_{10}-$, $-C_6H_{12}-$, $-C_7H_{14}-$, $-C_8H_{16}-$, $-C_9H_{18}-$, $-C_{10}H_{20}-$, and the like, or those in which these hydrogen atoms are partially or entirely substituted with fluorine. More specifically, $R^{23}$ may be $-C(CH_3)_2-C(CH_3)_2-$.

The polymer may further include a structural unit (C) that is different from both the structural units (A) and (B). The structural unit (C) may include a structural unit (C) represented by the following formula (C).

[Chem. 10]

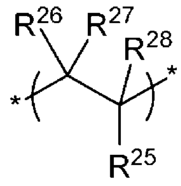

(C)

(In formula (C), $R^{25}$ is a hydrogen atom or a monovalent substituent, $R^{26}$ to $R^{28}$ are each independently a hydrogen atom or a monovalent substituent, or one of $R^{26}$ and $R^{27}$ is a hydrogen atom or a monovalent substituent, and the other forms a ring together with $R^{28}$. * is a bonding portion of the structural unit (C) with another structural unit.)

In formula (C), $R^{25}$ may be a monovalent organic group. The monovalent organic group may be a group represented by $-Z^1-R^{29}$. The number of carbon atoms that $R^{25}$ has may be, for example, 1 to 40, 1 to 20, 2 to 15, or 4 to 13. Here, $Z^1$ is a divalent linking group, and may be, for example, a group represented by a covalent bond, -O-, -S-, -C(=O)-, -C(=O)O-, -OC(=O)-, $-C(=O)NR^{38}-$, or $-NR^{39}C(=O)-$.

When the $Z^1$ is a covalent bond, -O-, -S-, -C(=O)-, -C(=O)O-, or -OC(=O)-, $R^{29}$ is a hydrogen atom or a monovalent organic group. When the $Z^1$ is $-C(=O)NR^{38}-$, $R^{29}$ and $R^{38}$ are each a hydrogen atom or a monovalent organic group, or $R^{29}$ forms a ring together with $R^{38}$. When the $Z^1$ is $-NR^{39}C(=O)-$, $R^{29}$ and $R^{39}$ are each a hydrogen atom or a monovalent organic group, or $R^{29}$ forms a ring together with $R^{39}$. The monovalent organic group as $R^{29}$, $R^{38}$, and $R^{39}$ may have 1 to 20, or 1 to 10 organic groups. When $R^{38}$ is a monovalent organic group, it may be a monovalent hydrocarbon group having 1 to 20 carbon atoms.

When the $Z^1$ is a covalent bond or -C(=O)O-, $R^{29}$ may be a hydrogen atom or a monovalent hydrocarbon group having 1 to 20 carbon atoms. When $Z^1$ is a covalent bond and $R^{29}$ is a hydrocarbon group, the hydrocarbon group may be an aliphatic hydrocarbon group. In addition, $R^{29}$ may be a monovalent organic group other than a hydrocarbon group or a hydrocarbon group having a ring structure. When $Z^1$ is -O-, it may be a monovalent organic group other than a group represented by W-H where W is an alkyl ether. When $R^{26}$ to $R^{28}$ are monovalent organic groups, examples of the monovalent organic group include the same as those exemplified for $R^{25}$.

In a group having an aromatic ring, a monovalent substituent may be bonded to the aromatic ring. Examples of the monovalent substituent include a monovalent organic group, and examples of the monovalent organic group include a substituted or unsubstituted hydrocarbon group, a group represented by the formula: $-R^{41}-(W^1-R^{42})n-W^2R^{43}$, and the like. The group represented by the formula: $-R^{41}-(W^1-R^{42})_n-W^2R^{43}$ may be bonded to the para-position of the benzene ring. $W^1$ may be a divalent group such as -O-, -S-, -C(=O)-, or -C(=O)O-, and may be -O-. $W^2$ may be a divalent group such as -O-, -S-, -C(=O)-, or - C(=O)O-, and may be -O-.

$R^{41}$ is a covalent bond or a divalent organic group. The divalent organic group may be a divalent hydrocarbon group. The number of carbon atoms that the divalent hydrocarbon group has may be, for example, 1 to 8, 1 to 5, or 1 to 3. A hydrogen atom bonded to the divalent hydrocarbon group may be substituted by a substituent such as a monovalent substituent (that is, it may be a substituted hydrocarbon group). Examples of the substituent include a halogen atom such as a fluorine atom. The divalent hydrocarbon group may be either an aromatic hydrocarbon group or an aliphatic hydrocarbon group, and may be an aliphatic hydrocarbon group. The aliphatic hydrocarbon group may be a saturated aliphatic hydrocarbon group, and may be a linear or branched aliphatic hydrocarbon group. Specific examples of the divalent hydrocarbon group may include a methylene group, an ethylene group, a 1,2-propylene group, a 1,3-propylene group, or a group in which a part or all of the hydrogen atoms thereof are substituted with a halogen atom such as a fluorine atom, and may be a methylene group.

$R^{42}$ is a divalent organic group, and may be a divalent hydrocarbon group. The number of carbon atoms that the divalent hydrocarbon group has may be, for example, 1 to 8, 1 to 5, or 1 to 3. A hydrogen atom bonded to the divalent hydrocarbon group may be substituted by a substituent such as a monovalent substituent (that is, it may be a substituted hydrocarbon group). Examples of the substituent include a halogen atom such as a fluorine atom. The divalent hydrocarbon group may be either an aromatic hydrocarbon group or an aliphatic hydrocarbon group, and may be an aliphatic hydrocarbon group. The aliphatic hydrocarbon group may be a saturated aliphatic hydrocarbon group, and may be a linear or branched aliphatic hydrocarbon group. Specific examples of the divalent hydrocarbon group may include a methylene group, an ethylene group, a 1,2-propylene group, a 1,3-propylene group, or a group in which a part or all of the hydrogen atoms thereof are substituted with a halogen atom such as a fluorine atom, and may be an ethylene group. n may be, for example, 1 to 10, 1 to 5, or 1 to 3. n may be an integer, or may be a rational number (for example, when n is an average value over the structural units (B) that the polymer has). When there are a plurality of $R^{42}$s in one structural unit, they may be different or the same.

$R^{43}$ may be a hydrogen atom or a divalent hydrocarbon group. The number of carbon atoms that the monovalent hydrocarbon group has may be, for example, 1 to 8, 1 to 5, or 1 to 3. A hydrogen atom bonded to the monovalent hydrocarbon group may be substituted by a substituent such as a monovalent substituent (that is, it may be a substituted hydrocarbon group). Examples of the substituent include a halogen atom such as a fluorine atom. The monovalent hydrocarbon group may be either an aromatic hydrocarbon group or an aliphatic hydrocarbon group, and may be an aliphatic hydrocarbon group. The aliphatic hydrocarbon group may be a saturated aliphatic hydrocarbon group, and may be a linear or branched aliphatic hydrocarbon group. Specific examples of the divalent hydrocarbon group may include a methyl group, an ethyl group, an isopropyl group, an n-propyl group, or a group in which a part or all of the hydrogen atoms thereof are substituted with a halogen atom such as a fluorine atom, and may be a methyl group.

The structural unit (C) may include at least one type of structural unit derived from a monomer represented by the following formula (C1).

[Chem. 11]

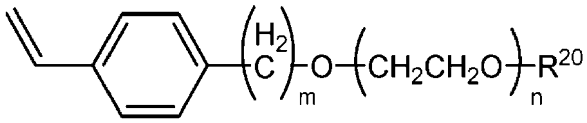

(C 1)

(In the formula, m is 0 to 4, and n is 0 to 10. $R^{20}$ may be a hydrogen atom or an alkyl group having 1 to 4 carbon atoms. The alkyl group may be a methyl group or an ethyl group, and may be a methyl group.)

In formula (C1), m may be, for example, 1 to 3, 1 to 2, or 1. m may be an integer, or may be an average value over the entire structural units derived from the monomer represented by formula (C1) included in the polymer (in this case, m is a rational number). In formula (C1), n may be, for example, 1 to 4, or 1 to 3. n may be an integer, or may be an average value over the entire structural units derived from the monomer represented by formula (C1) included in the polymer (in this case, n is a rational number).

When one of $R^{26}$ and $R^{27}$ forms a ring together with $R^{28}$, the ring members of the ring may be, for example, 4 to 10, 4 to 8, or 5 to 7. The structural unit (C) may be the following structural unit (C2).

[Chem. 12]

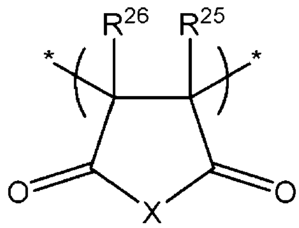

(C2)

(In formula (C2), X is an oxygen atom or a tertiary amino group represented by $-NR^{24}-$, $R^{24}$ is a monovalent organic group, and $R^{25}$ and $R^{26}$ are each independently a hydrogen atom or a monovalent substituent.)

The number of carbon atoms that $R^{24}$ has may be, for example, 1 to 20, 1 to 15, or 2 to 10. $R^{24}$ may be a hydrocarbon group or a hydrocarbon group substituted with fluorine, and may be an ethyl group, a 2,2,2-trifluoroethyl group, an n-dodecyl group, a cyclohexyl group, or a benzyl group.

The ratio of the structural unit (A) to all structural units included in the polymer may be, for example, 0.2 to 0.95, 0.2 to 0.8, 0.3 to 0.7, or 0.4 to 0.6.

The ratio of the structural unit (C) to all structural units included in the polymer may be, for example, 0.05 to 0.8, 0.2 to 0.8, 0.3 to 0.7, or 0.4 to 0.6. The ratio of the structural unit (C) to all structural units included in the polymer may be, for example, 0.8 or less, 0.7 or less, 0.6 or less, or 0.3 or less.

The total ratio of the structural unit (A) and the structural unit (C) to all structural units included in the polymer may be, for example, 0.5 or more, 0.6 or more, 0.7 or more, 0.8 or more, 0.9 or more, or 0.95 or more. The total ratio of the structural unit (A) and the structural unit (C) to all structural units included in the polymer may be, for example, less than 1.0, or 0.97 or less. The total ratio of the structural unit (A) and the structural unit (C) to all structural units included in the polymer may be, for example, 0.5 or more and less than 1.0, or 0.5 to 0.97.

The content of the structural unit (A) with respect to the total mass of the polymer may be, for example, 25 to 95%

by mass, 40 to 90% by mass, or 50 to 90% by mass.

The content of the structural unit (C) with respect to the total mass of the polymer may be, for example, 5 to 75% by mass, 10 to 60% by mass, or 10 to 50% by mass. The content of the structural unit (C) with respect to the total mass of the polymer may be, for example, 75% by mass or less, 60% by mass or less, 50% by mass or less, or 25% by mass or less.

The total content of the structural unit (A) and the structural unit (C) with respect to the total mass of the polymer may be, for example, 90% by mass or more, 95% by mass or more, or 98% by mass or more. The total content of the structural unit (A) and the structural unit (C) with respect to the total mass of the polymer may be, for example, 100% by mass or less, less than 100% by mass, or 99% by mass or less. The total content of the structural unit (A) and the structural unit (C) with respect to the total mass of the polymer may be, for example, 90 to 100% by mass.

When the polymer includes the structural unit (B), the molar ratio m of the structural unit (B) to all structural units included in the polymer may be, for example, 0.2 to 0.8, 0.25 to 0.75, 0.3 to 0.7, 0.35 to 0.65, or 0.4 to 0.6. The content of the structural unit (B) with respect to the total mass of the polymer may be, for example, greater than 10% by mass and 95% by mass or less, 15 to 95% by mass, 20 to 80% by mass, 25 to 60% by mass, or 30 to 45% by mass.

The number average molecular weight (Mn) of the polymer may be, for example, 5,000 to 400,000, 8,000 to 200,000, 10,000 to 150,000, or 10,000 to 100,000. The weight average molecular weight (Mw) of the polymer may be, for example, 5,000 to 600,000, 10,000 to 450,000, 20,000 to 200,000, or 20,000 to 100,000. The molecular weight distribution (Mw/Mn) of the polymer may be, for example, 1.0 to 5.0, 1.2 to 3.0, or 1.3 to 2.5. The number average molecular weight and the weight average molecular weight of the polymer can be measured, for example, by gel permeation chromatography.

The method for producing the polymer having an ability to preferentially conduct alkali metal ions is not particularly limited, but for example, it can be produced by performing radical addition polymerization on a corresponding monomer.

The content of the polymer in the electrolyte composition may be, for example, 1 to 80% by mass, 3 to 70% by mass, 5 to 60% by mass, or 10 to 40% by mass, with respect to the total amount of the electrolyte composition part.

## < The Film-forming Additive >

The film-forming additive included in the electrolyte composition of the present embodiment is a compound that can form a film (solid electrolyte interface, SEI) on an electrode surface by an electrolytic reaction. Therefore, the film-forming additive may be an SEI forming agent.

The film-forming additive may be at least one of an electrolytically oxidative polymerizable compound and an electrolytically reductive polymerizable compound, but may be an electrolytically reductive polymerizable compound. By using an electrolytically reductive polymerizable compound, a film can be formed on a negative electrode.

Examples of the film-forming additive include electrolytically reductive polymerizable compounds such as a carbonate compound, an aliphatic polyvalent unsaturated compound, an aromatic compound having a vinyl group, an unsaturated ester compound, an unsaturated nitrile compound, a polyvalent ester compound, a vinyl ester compound of a carboxylic acid, a cyclic acid anhydride, a cyclic imide compound, a phosphonic acid ester compound, a vinyl group-containing silanebased compound, a furan derivative including two double bonds in each molecule, a sulfur-based compound, an organic nitro compound, a halogenated cyclic ester, a nitrate ester compound, a nitrite ester compound, an aromatic ester compound, an aromatic isocyanate compound, a boron-based compound, a halogenated organic compound, polydimethylsiloxane, and silanes. The electrolyte composition may include one or more types of film-forming additives.

Examples of the film-forming additive also include electrolytically oxidative polymerizable compounds such as pyrrole, aniline, thiophene, and derivatives thereof.

Note that the film-forming additive includes a compound that can be used as an organic solvent. When the electrolyte composition of the present embodiment includes a compound that can be used as a film-forming additive and an organic solvent, it may further include another compound as the organic solvent, and may further include another compound as the film-forming additive. That is, the electrolyte composition of the present embodiment may include one or more compounds (that is, a total of two or more compounds) as the organic solvent and the film-forming additive, respectively.

The carbonate compound may be a cyclic carbonate compound or a linear carbonate compound. The carbonate compound may be a carbonate compound substituted with an ethylenically unsaturated group such as a vinyl group or a halogen atom such as a fluorine atom. Examples thereof include ethylene carbonate, vinylene carbonate, vinyl ethylene carbonate, allyl ethyl carbonate, and fluoroethylene carbonate (4-fluoro-1,3-dioxan-2-one).

Examples of the aliphatic polyvalent unsaturated compound include a conjugated unsaturated compound such as butadiene. Examples of the aromatic compound having a vinyl group include vinylpyridine such as 2-vinylpyridine, methyl cinnamate, and styrene. Examples of the unsaturated ester compound include a (meth)acrylic acid ester and an $\alpha$-cyanoacrylic acid ester. Examples of the unsaturated nitrile compound include an $\alpha,\beta$-unsaturated nitrile compound such as (meth)acrylonitrile. Examples of the polyvalent ester compound include a dialkyl malonate compound such as a

dimethyl malonate ester, a diethyl malonate ester, a di-n-hexyl malonate ester, and a dicyclohexyl malonate ester. Examples of the vinyl ester compound of a carboxylic acid include vinyl acetate and divinyl adipate. Examples of the cyclic acid anhydride include maleic anhydride. Examples of the cyclic imide compound include a compound having a carbon-carbon unsaturated bond in the ring, such as maleimide, and a compound not having a carbon-carbon unsaturated bond in the ring, such as succinimide. Examples of the organic nitro compound include a nitro compound having an ethylenically unsaturated group, such as nitroethylene (nitroethene).

Examples of the sulfur-based compound include $SO_2$ (sulfur dioxide), polysulfide, a sulfite ester compound, a sulfonic acid ester compound, a sulfuric acid ester compound, a sulfone compound, and the like. The sulfonic acid ester compound may be a cyclic sulfonic acid ester compound. Examples of the sulfonic acid ester include 1,3-propanesultone, 1,4-butanesultone, 1,3-propenesultone, and 1,4-butenesultone. The sulfuric acid ester compound may be a cyclic sulfuric acid ester compound. Examples of the sulfuric acid ester compound include propylene sulfate, butylene sulfate, and propyl ethylene sulfate. Examples of the sulfite ester compound include a cyclic alkyl sulfite ester compound, an aromatic (aryl) sulfite ester compound, and the like. Examples of the sulfite ester include ethylene sulfite and propylene sulfite. The sulfone compound may be a cyclic sulfone compound. Examples of the sulfone compound include sulfolane, 3-methylsulfolane, 3-sulfolene, and 2-sulfolene.

Examples of the boron-based compound include $B_2O_3$ (boron oxide), an organic boron compound, a boroxine compound, and the like.

The film-forming additive may include at least one of vinylene carbonate and fluoroethylene carbonate.

The content of the film-forming additive in the electrolyte composition may be, for example, 0.01 to 100 parts by mass, 0.1 to 80 parts by mass, 1 to 50 parts by mass, 1 to 30 parts by mass, or 5 to 25 parts by mass, with respect to 100 parts by mass of the polymer having an ability to preferentially conduct alkali metal ions.

< Alkali Metal Salt >

The electrolyte composition of the present embodiment includes an alkali metal salt. Since the electrolyte composition includes an alkali metal, when a film is formed from the film-forming additive, alkali metal ions are included in the film, and it is considered that the ionic conductivity of the film formed on the electrode surface is improved.

Examples of the alkali metal salt include MF, MC1, MBr, MI, $MNO_3$, $MClO_4$, $MPF_6$, $MBF_4$, $M_2SO_4$, $M[(C_nF_{2h+1})SO_3]$ (h is 0 to 3), $M[(C_hF_{2h+1})SO_2]_2N$ (h is 0 to 3), $M\{[(C_hF_{2h+1})SO_2]N[(C_iF_{2i+1})SO_2]\}$ (h, i are 0 to 3), MBOB (BOB is bis(oxalato)borate), and the like, where M is an alkali metal. One or more types of alkali metal salts may be used. M is not particularly limited as long as it is an alkali metal, but may include lithium, sodium, or potassium, may include lithium or sodium, and may include potassium. In other words, the alkali metal salt may include, for example, at least one selected from the group consisting of a lithium salt, a sodium salt, and a potassium salt, and may be a lithium salt or a sodium salt. The alkali metal element included in the alkali metal salt may be the same alkali metal element as the alkali metal element that the structural unit (A) has.

The content of the alkali metal salt in the electrolyte composition may be, for example, 0.1 to 250 parts by mole, 2.5 to 200 parts by mole, 5 to 180 parts by mole, or 10 to 150 parts by mole, in terms of alkali metal ions included in the alkali metal salt, with respect to 100 moles of the total amount of the structural unit (A) and the structural unit (B) that the polymer having an ability to preferentially conduct alkali metal ions has. The content of the alkali metal salt in the electrolyte composition may be, for example, 10 to 200 parts by mass, 20 to 150 parts by mass, 30 to 100 parts by mass, or 40 to 75 parts by mass, with respect to 100 parts by mass of the polymer having an ability to preferentially conduct alkali metal ions included in the electrolyte composition.

< Organic Solvent>

Examples of the organic solvent include an aprotic solvent. The organic solvent may be a compound other than the above-described film-forming additive.

The organic solvent may include one or more organic solvents selected from the group consisting of a carbonate-based solvent, an ether-based solvent, a fluorine-based solvent, a nitrile-based solvent, a lactone-based solvent, a phosphate ester-based solvent, and a sulfone-based solvent, and may include a phosphate ester. The organic solvent may include one or more solvents selected from the group consisting of a carbonate-based solvent, an ether-based solvent, a fluorine-based solvent, a nitrile-based solvent, and a phosphate ester-based solvent, and may include a carbonate-based solvent. In the electrolyte composition, the polymer having an ability to preferentially conduct alkali metal ions may be swollen by the organic solvent.

Examples of the carbonate-based solvent include linear carbonates such as dimethyl carbonate, diethyl carbonate, and ethyl methyl carbonate; and cyclic carbonates such as ethylene carbonate, propylene carbonate, butylene carbonate, and vinylene carbonate. The organic solvent may be a mixed solvent including two or more types of carbonate-based solvents, and may be a mixed solvent including one or more types of cyclic carbonate-based solvents and one or

more types of linear carbonate-based solvents, or a mixed solvent including two or more types of cyclic carbonate-based solvents.

Examples of the ether-based solvent include cyclic ethers such as tetrahydrofuran, 2-methyltetrahydrofuran, tetrahydropyran, and 1,3-dioxolane; and linear ethers such as 1,2-diethoxyethane and ethoxymethoxyethane.

Examples of the fluorine-based solvent include hydrofluorocarbons such as perfluorooctane; hydrofluoroethers such as methyl nonafluorobutyl ether and ethyl nonafluorobutyl ether; hydrofluoroolefins such as 1,3,3,3-tetrafluoropropene; and 2,2,2-trifluoro-N,N-dimethylacetamide.

Examples of the phosphate ester include trimethyl phosphate (TMP), triethyl phosphate (TEP), and tris(2,2,2-trifluoroethyl) phosphate (TFEP).

Examples of the nitrile-based solvent include acetonitrile and succinonitrile. Examples of the lactone-based solvent include γ-butyrolactone.

Examples of the phosphate ester include trimethyl phosphate (TMP), triethyl phosphate (TEP), and tris(2,2,2-trifluoroethyl) phosphate (TFEP).

Other examples of the organic solvent include sulfone-based solvents such as sulfolane and 3-methylsulfolane; solvents having a sulfonyl group such as dimethyl sulfoxide (DMSO); amide-based solvents such as dimethylformamide (DMF) and dimethylacetamide (DMA); organic solvents having a carbonyl group such as acetone (-C(=O)-, referring to carbonyl compounds other than amide compounds such as esters, ketones, and aldehydes); and nitrogen-containing aromatic compounds such as pyridine (compounds containing nitrogen as a ring member of an aromatic ring, which may be either a monocyclic system or a condensed ring system). The organic solvent may be used as one type only, or as a mixed solvent including two or more types of organic solvents. The organic solvent may include a carbonate-based solvent and at least one of a fluorine-based solvent and a phosphate ester.

The content of the organic solvent in the electrolyte composition may be, for example, 10 to 1800 parts by mass, 50 to 1500 parts by mass, 100 to 600 parts by mass, or 150 to 450 parts by mass, with respect to 100 parts by mass of the polymer having an ability to preferentially conduct alkali metal ions. The polymer having an ability to preferentially conduct alkali metal ions included in the electrolyte composition may be swollen by the organic solvent.

The electrolyte composition may further include other resins such as a fluorine-based resin (a binder resin, a resin other than the polymer having an ability to preferentially conduct alkali metal ions), a fabric such as a non-woven fabric, a porous material, a viscosity modifier, an anion receptor, and the like. The electrolyte composition may include, as the fluorine-based resin, a resin having a carbon chain as a main chain. The carbon chain may be one formed by radical polymerization of an ethylenically unsaturated group. Examples of the fluorine resin include poly(vinylidene fluoride-co-hexafluoropropylene) (PVDF-HFP) and polyvinylidene fluoride (PVDF). The porous material may be a resin-made porous material. Specific examples thereof include a porous polyolefin film and a porous ceramic film.

The content of the other resin may be, for example, 10 to 200 parts by mass, or 50 to 150 parts by mass, with respect to 100 parts by mass of the polymer having an ability to preferentially conduct alkali metal ions.

< Anion Receptor >

The anion receptor is not particularly limited. The formula weight (molecular weight) of the anion receptor may be, for example, 1000 or less, 800 or less, or 500 or less. The anion receptor may have Lewis acidity. In this case, the anion receptor can capture an anion by accepting a non-covalent electron pair of the anion and forming an acid-base complex. Examples of such a compound include a compound having an electron-deficient atom. Note that the electron-deficient atom refers to an atom that is covalently bonded to another atom but whose outermost shell electrons are less than 8. Examples of the electron-deficient atom include an atom belonging to Group 13 of the periodic table, and more specifically, may be at least one of an aluminum atom and a boron atom, and may be a boron atom.

Examples of the anion receptor having a boron atom include a boron compound that functions as a Lewis acid, and may be diborane, a compound represented by the following chemical formulas IA to IE, and the like.

[Chem. 13]

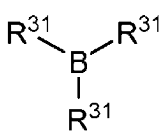

IA

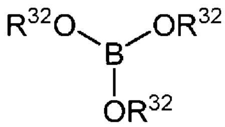

IB

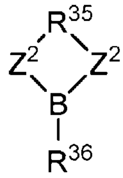

IC

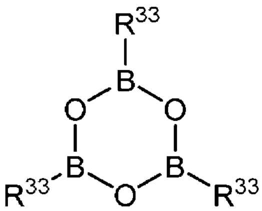

ID

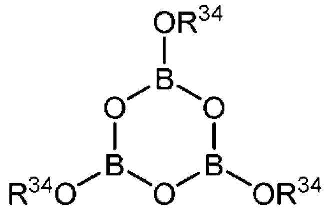

IE

In formulas IA and ID, $R^{31}$ and $R^{33}$ are each a halogen atom or a monovalent organic group. The halogen atom may be a fluorine atom or a chlorine atom, and may be a fluorine atom. The number of carbon atoms that the monovalent organic group has may be, for example, 1 to 20, 1 to 15, 2 to 10, or 2 to 6. Here, the monovalent organic group is bonded to the boron atom (B) in formula IA or ID by the carbon atom that the monovalent organic group has. The monovalent organic group may be a hydrocarbon group or a halogen-substituted hydrocarbon group, and the halogen-substituted hydrocarbon group may be a partially or fully fluorinated hydrocarbon group. In one molecule, a plurality of $R^{31}$s and $R^{33}$s may be different from each other or all the same.

In formulas IB and IE, $R^{32}$ and $R^{34}$ are each a hydrogen atom or a monovalent organic group. The halogen atom may be a fluorine atom or a chlorine atom, and may be a fluorine atom. The number of carbon atoms that the monovalent organic group has may be, for example, 1 to 20, 1 to 15, 2 to 10, or 2 to 6. Here, the monovalent organic group is bonded to the oxygen atom (O) in formula IB or IE by the carbon atom that the monovalent organic group has. The monovalent organic group may be a hydrocarbon group or a halogen-substituted hydrocarbon group, and the halogen-substituted hydrocarbon group may be a partially or fully fluorinated hydrocarbon group. In one molecule, a plurality of $R^{32}$s and $R^{34}$s may be different from each other or all the same.

In formula IC, $R^{35}$ is a divalent organic group, and $Z^2$ is a covalent bond or an oxygen atom. The number of carbon atoms that the divalent organic group has may be, for example, 1 to 15, 2 to 10, or 3 to 8. $R^{35}$, the two $Z^2$s, and the boron atom (B) form a ring, and the number of ring members of the ring may be, for example, 4 to 8, 5, or 6. Here, when $Z^2$ is an oxygen atom, the divalent organic group is bonded to $Z^2$ in formula IC by the carbon atom that the divalent organic group has. When $Z^2$ is a covalent bond, the divalent organic group is bonded to the boron atom (B) in formula IC by the carbon atom that the divalent organic group has. The divalent organic group may be a hydrocarbon group or a halogen-substituted hydrocarbon group, and the halogen-substituted hydrocarbon group may be a partially or fully fluorinated hydrocarbon group. In one molecule, a plurality of $Z^2$s may be different from each other or all the same.

In formula IC, $R^{36}$ is a hydrogen atom or a monovalent organic group. The monovalent organic group may be a group that bonds to the boron atom (B) in formula IC by the carbon atom that the monovalent organic group has, but may be a group represented by $-OR^{37}$. $R^{37}$ is a hydrogen atom or a monovalent organic group. The monovalent organic group as $R^{37}$ is bonded to the oxygen atom of $-OR^{37}$ by the carbon atom that the monovalent organic group has. The number of carbon atoms that the monovalent organic group as $R^{36}$ or $R^{37}$ has may be, for example, 1 to 20, 1 to 15, 2 to 10, or 2 to 6. The monovalent organic group may be a hydrocarbon group or a halogen-substituted hydrocarbon group, and the halogen-substituted hydrocarbon group may be a partially or fully fluorinated hydrocarbon group.

Specific examples of the boron compound include organic boron compounds such as diborane, boron trifluoride, boric acid, boroxine, trimethylborane, triethylborane, tri-n-propylborane, triisopropylborane, triphenylborane, trimethyl borate, triethyl borate, triphenyl borate, tri-n-propyl borate, triisopropyl borate, 2-methoxy-4,4,5,5-tetramethyl-1,3,2-dioxaborolane, 2-ethoxy-4,4,5,5-tetramethyl-1,3,2-dioxaborolane, 2,4,6-trimethylboroxine, 2,4,6-triethylboroxine, 2,4,6-trivinylboroxine, 2,4,6-trimethoxyboroxine, 2,4,6-trimethoxyboroxine, and triphenylboroxine, and halogen-substituted hydrocarbon groups such as tris(2,2,2-trifluoroethyl) borate, 2,4,6-tris(4-fluorophenyl)boroxine, and 2,4,6-tris(3,4,5-trifluorophenyl)boroxine.

Examples of the anion receptor having an aluminum atom include an aluminum compound that functions as a Lewis acid, and examples thereof include a compound represented by the formula $AlX^1_3$ ($X^1$ is a halogen atom, and may be a fluorine atom) and a compound represented by the formula: $Al(OR^{35})_3$ ($R^{35}$ is a hydrocarbon group, and may be an alkyl group).

In addition, the anion receptor may be an azaether. The azaether is a compound in which -O- of an ether compound is replaced with - $NR^E$- (where $R^E$ is a hydrogen atom or an organic group). The azaether may be either a linear azaether or a cyclic azaether. The azaether may have an electron-withdrawing group, for example, in a hydrocarbon moiety or the like.

The content of the anion receptor in the electrolyte composition may be, for example, 10 to 200 parts by mole, 30 to 180 parts by mole, 50 to 150 parts by mole, or 80 to 130 parts by mole, with respect to 100 moles of the structural unit (A) that the polymer having an ability to preferentially conduct alkali metal ions has.

Some anion receptors also function as film-forming additives. When the electrolyte composition of the present embodiment includes an anion receptor, the electrolyte composition includes one or more of each of an anion receptor, an organic solvent, and a film-forming additive (a total of three or more).

The content of the other resin in the electrolyte composition may be, for example, 10 to 75% by mass, 15 to 65% by mass, 20 to 50% by mass, or 25 to 45% by mass, with respect to the total amount of the polymer having an ability to preferentially conduct alkali metal ions and the other resin included in the electrolyte composition.

The method for producing the electrolyte composition is not particularly limited, but examples thereof include a method of producing a dry film by drying a film of the polymer having an ability to preferentially conduct alkali metal ions or by mixing the polymer and another resin to produce a dry film, and then impregnating the dry film with an organic solvent. The film-forming additive may be added by dissolving it in an organic solvent to be impregnated into the dry film and impregnating it into the dry film. As for the alkali metal salt, an organic solvent may be added after mixing the polymer, optionally another resin, and the alkali metal salt to produce a dry film, or the alkali metal salt may be dissolved in an organic solvent and added to the dry film.

The electrolyte composition of the present embodiment can be used as a composition for forming an electrolyte for a battery, a capacitor, or the like. That is, the electrolyte of the battery or the like of the present embodiment includes the electrolyte composition. Examples of the battery include a battery that performs charging and discharging by the movement of alkali metal ions, such as a lithium-ion battery and a sodium-ion battery. The battery may be a primary battery or a secondary battery, and may be a solid-state battery.

The battery of the present embodiment includes a positive electrode, a negative electrode, and an electrolyte disposed between the positive electrode and the negative electrode. The positive electrode may be one in which a layer including a positive electrode material is formed on a current collector. In addition, the negative electrode may be one in which a layer including a negative electrode material is formed on a current collector. Hereinafter, a lithium-ion battery will be described as an example.

The negative electrode of the lithium-ion battery is not particularly limited, and may include a negative electrode active material, and may include a conductive auxiliary agent, a binder, and the like as necessary. For example, examples of the negative electrode active material include simple substances of elements such as Li, Si, P, Sn, Si-Mn, Si-Co, Si-Ni, In, and Au, and alloys or composites including these elements, carbon materials such as graphite, substances in which lithium ions are inserted between layers of the carbon material, and oxides including titanium.

The positive electrode of the lithium-ion battery is not particularly limited, and may include a positive electrode active material, and may include a conductive auxiliary agent, a binder, and the like as necessary. The positive electrode active material is not particularly limited, and examples thereof include a lithium composite metal oxide including lithium and a transition metal element. The transition metal element may be at least one selected from the group consisting of V, Cr, Mn, Fe, Co, Ni, Cu, and Al, and may include Ni. Examples of the lithium composite metal oxide include $LiCoO_2$, $LiNiO_2$, $LiMn_2O_4$, $LiNi_{0.5}Mn_{1.5}O_4$, $Li_2MnO_3$, $LiNi_xMn_yCO_{1-x-y}O_2$ [$0 < x+y < 1$]), $LiNi_xCo_yAl_{1-x-y}O_2$ [$0 < x+y < 1$]), $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, and $Li_2MnSiO_4$. When the positive electrode active material includes an alkali metal element other than Li, specific examples thereof include those in which Li in the above specific examples is replaced with another alkali metal.

The negative electrode (negative electrode material) and the positive electrode (positive electrode material) of the present embodiment may further include a solid electrolyte material, a binder resin (binder), a conductive auxiliary agent, and the like.

The battery may have a separator. The separator may be a porous material, and may be a resin-made porous material. Specific examples thereof include a porous polyolefin film and a porous ceramic film.

## EXAMPLES

<Synthesis of Copolymer 1>

Monomer X represented by the following formula: 0.558 g, styrene: 0.149 g, and azobisisobutyronitrile: 11.7 mg were dissolved in 6.7 mL of dehydrated acetonitrile, and the reaction was carried out at 60°C for 24 hours under a nitrogen atmosphere while confirming the monomer consumption rate by adding tetralin as an internal standard substance. The polymerization solution was dialyzed in acetonitrile and vacuumdried at 120°C to obtain 0.640 g (yield 87%) of copolymer 1. The monomer introduction ratio was monomer X:styrene = 52:48. The monomer introduction ratio was calculated from $^1$H-NMR of copolymer 1.

The number average molecular weight Mn of copolymer 1 was $9.4 \times 10^4$, the weight average molecular weight Mw was $4.2 \times 10^5$, and the molecular weight distribution Mw/Mn was 4.45. The number average molecular weight and the weight average molecular weight were measured by gel permeation chromatography.

[Chem. 14]

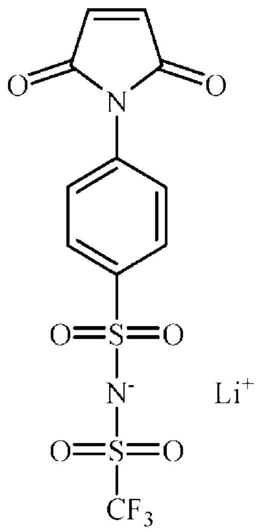

(X)

Note that monomer X was synthesized by adding the following compound and a lithium acetate aqueous solution (14.0 mmol, 0.92 g) to acetic anhydride (12.3 mL, manufactured by Tokyo Chemical Industry Co., Ltd.) and stirring at 70°C for 3 hours.

[Chem. 15]

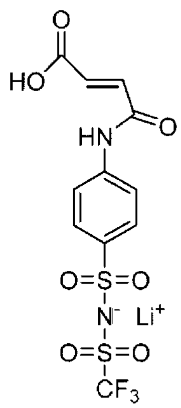

(Examples 1 to 11 and Comparative Examples 1 to 5)

<Preparation of Electrolyte Composition>

Each component was blended in the composition described in Tables 1 and 2 to obtain the electrolyte composition of each Example and Comparative Example. As a method for producing the electrolyte composition, first, a lithium salt was added to a solution in which the copolymer obtained as described above was dissolved in acetonitrile (manufactured by FUJIFILM Wako Pure Chemical Corporation) and 1-methyl-2-pyrrolidone (manufactured by FUJIFILM Wako Pure Chemical Corporation), and the mixture was impregnated into a PE porous film, and then the solvent was removed to obtain a dry film. Then, an organic solvent in which a film-forming additive was dissolved was added to the dry film and which was then swollen to obtain an electrolyte composition.

Note that the unit of the content of the organic solvent and the film-forming additive in the tables is parts by mass with respect to 100 parts by mass of the polymer having an ability to preferentially conduct alkali metal ions. In addition, the unit of the content of the alkali metal salt and the anion receptor in the tables is parts by mole with respect to 100 moles of the structural unit derived from monomer X in the copolymer.

Note that the abbreviations in the tables are as follows.

MI-St: Copolymer 1 synthesized as described above
PVDF-HFP: Poly(vinylidene fluoride-co-hexafluoropropylene)
EC: Ethylene carbonate
PC: Propylene carbonate
DMC: Dimethyl carbonate
FDMA: 2,2,2-Trifluoro-N,N-dimethylacetamide
TMP: Trimethyl phosphate
TEP: Triethyl phosphate
LiFSI: Lithium bis(fluorosulfonyl)imide
LiTFSI: Lithium bis(trifluoromethanesulfonyl)imide
VC: Vinylene carbonate
FEC: Fluoroethylene carbonate
TFB: 2,4,6-Tris(4-fluorophenyl)boroxine

<Measurement of Lithium Ion Transference Number>

The lithium ion transference number of the electrolyte composition of each Example and Comparative Example was measured by the following method. The results are shown in Table 2.

An evaluation cell of a coin-type lithium battery CR2032 was assembled in a glove box under a dry argon atmosphere. Specifically, each layer was laminated in the following order in the evaluation cell to produce a test laminate.

(Lithium/Electrolyte Composition/Lithium)

The lithium ion transference number measurement method is one introduced in Polymer, 28, 2324 (1987). That is, at room temperature (25°C), 10 mV was applied to the test laminate, an initial current value ($I_0$) and a steady-state current value ($I_{ss}$) were measured, and further, an interface resistance measurement value $R_0$ before voltage application and an interface resistance measurement value $R_{SS}$ after voltage application were obtained by a complex impedance method. Then, the obtained values were introduced into the following formula to obtain the lithium ion transference number ($t_{Li+}$). V in the formula is the applied voltage.

$$t_{Li+} = I_{ss}(V - I_0R_0) / I_0(V - I_{SS}R_{SS})$$

<Measurement of Maximum DC Current Density>

An evaluation cell of a coin-type battery CR2032 was assembled in a glove box under a dry argon atmosphere. Specifically, each layer was laminated in the following order in the evaluation cell to produce a test laminate.

(Lithium/Electrolyte Composition/Lithium)

A constant current test was performed on the evaluation cell by passing current densities of 100, 200, 300, 400, 500, 600, 700, 800, 900, 1000, 1100, 1200, 1300, 1400, 1500, 1600, 1700, 1800, 1900, and 2000 μA/cm2 alternately in the positive and negative directions for 5 cycles each in this order, and the test was terminated when the voltage reached 2 V.

The maximum current density that could be passed before reaching 2 V was defined as the maximum DC current density, and the voltage value at that time was determined. The results are shown in Tables 1 and 2.

FIG. 1 is a diagram showing a relationship between current density and voltage value in a lithium dissolution-deposition test of Comparative Example 1, Example 1, and Example 2.

[Table 1]

| | Resin Component | Organic Solvent | | Film-Forming Additive | | Alkali Metal Salt | | Maximum DC Current Density ($mA/cm^2$) | Voltage (V) |
|---|---|---|---|---|---|---|---|---|---|
| | | Type | Content (parts by mass) | Type | Content (parts by mass) | Type | Content (parts by mole) | | |
| Comparative Example 1 | MI-St/PVDF-HFP=66:34 (mass ratio) | EC:PC[1)] | 200 | - | - | - | - | 0.8 | 2.0[4)] |
| Comparative Example 2 | | | 190 | FEC | 10 | | | 0.9 | 2.04[4)] |
| Comparative Example 3 | | | 180 | FEC | 20 | | | 1.0 | 2.0[4)] |
| Comparative Example 4 | | | 190 | VC | 10 | | | 1.0 | 2.0[4)] |
| Comparative Example 5 | | | 180 | VC | 20 | | | 1.0 | 2.0[4)] |
| Example 1 | | | 190 | FEC | 10 | LiFSI | 25 | 1.6 | 0.3 |
| Example 2 | | | 190 | FEC | 10 | | 50 | 1.6 | 0.3 |
| Example 3 | | | 190 | VC | 10 | | 25 | 1.2 | 0.3 |
| Example 4 | | | 190 | VC | 10 | | 50 | 1.2 | 0.3 |
| Example 5 | | EC:DMC[2)] | 190 | FEC | 10 | | 50 | 1.2 | 0.3 |
| Example 10 | | EC:PC:TMP[3)] | 190 | FEC | 10 | | 50 | 0.8 | 0.3 |

1) Mixed solvent containing EC and PC in a volume ratio of 50:50
2) Mixed solvent containing EC and DMC in a volume ratio of 50:50
3) Mixed solvent containing EC, PC, and TMP in a mass ratio of 25:25:50
4) The accurate value could not be measured because the voltage value exceeded the maximum value (2.0 V) of the measurement range.

[Table 2]

| | Resin Component | Organic Solvent | | Film-Forming Additive | | Alkali Metal Salt | | Maximum DC Current Density ($mA/cm^2$) | Voltage (V) | Li Transference Number |
|---|---|---|---|---|---|---|---|---|---|---|
| | | Type | Content (parts by mass) | Type | Content (parts by mass) | Type | Content (parts by mole) | | | |
| Comparative Example 1 | MI-St/PVDF-HFP=66:34 (mass ratio) | EC:PC 1) | 200 | - | - | - | - | 0.8 | 2.0 2) | 0.9 |
| Example 1 | | | 190 | FEC | 10 | LiFSI | 25 | 1.6 | 0.3 | 0.85 |
| Example 6 | | | | | | LiTFSI | 25 | 1.2 | 0.6 | 0.91 |
| Example 7 | | | | | | $LiBF_4$ | 25 | 1.0 | 0.6 | 0.90 |
| Example 8 | | | | | | LiBOB | 25 | 0.8 | 0.6 | 0.89 |
| Example 9 | | | | | | $LiNO_3$ | 25 | 0.8 | 0.6 | 0.96 |
| Example 11 | | | | | | $LiPF_6$ | 25 | 2.8 | 1.0 | 0.85 |

1) Mixed solvent containing EC and PC in a volume ratio of 50:50
2) The accurate value could not be measured because the voltage value exceeded the maximum value (2.0 V) of the measurement range.

According to Tables 1 and 2, it can be seen that the electrolyte composition of the present embodiment can pass a sufficiently large current at a low voltage value. Comparing Comparative Example 1 with Comparative Examples 2 to 5, although a slight improvement in the current value was observed, and thus the effect of the electrolyte composition including the film-forming additive was exerted, a large voltage was required to pass a current of the same level as compared with the Examples.

<Synthesis of Copolymer 2>

Monomer X: 0.74 g, isobutyl vinyl ether (IBVE): 0.34 g, and azobisisobutyronitrile: 8.2 mg were dissolved in 10 mL of dehydrated acetonitrile, and the reaction was carried out at 60°C for 24 hours under a nitrogen atmosphere while confirming the monomer consumption rate by adding tetralin as an internal standard substance. The polymerization solution was dialyzed in acetonitrile and vacuum-dried at 120°C to obtain 0.34 g (yield 82%) of copolymer 2. The monomer introduction ratio was monomer X:IBVE = 62:38. The monomer introduction ratio was calculated from $^1$H-NMR of copolymer 2.

<Synthesis of Copolymer 3>

Monomer X: 0.94 g, dodecyl vinyl ether (DDVE): 1.53 g, and azobisisobutyronitrile: 16.4 mg were dissolved in 20 mL of dehydrated acetonitrile, and the reaction was carried out at 60°C for 24 hours under a nitrogen atmosphere while confirming the monomer consumption rate by adding tetralin as an internal standard substance. The polymerization solution was dialyzed in acetonitrile and vacuum-dried at 120°C to obtain 0.64 g (yield 44%) of copolymer 3. The monomer introduction ratio was monomer X:DDVE = 55:45. The monomer introduction ratio was calculated from $^1$H-NMR of copolymer 3.

<Synthesis of Copolymer 4>

Monomer X: 0.78 g, the following monomer (B1): 0.46 g, and azobisisobutyronitrile: 16.4 mg were dissolved in 6.7 mL of dehydrated acetonitrile, and the reaction was carried out at 60°C for 24 hours under a nitrogen atmosphere while confirming the monomer consumption rate by adding tetralin as an internal standard substance. The polymerization solution was dialyzed in acetonitrile and vacuum-dried at 120°C to obtain 1.08 g (yield 87%) of copolymer 4. The monomer introduction ratio was monomer X:B1 = 48:52. The monomer introduction ratio was calculated from $^1$H-NMR of copolymer 4.

[Chem. 16]

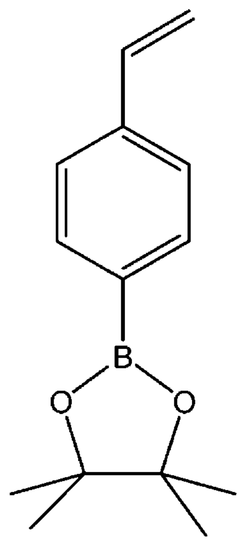

(B1)

(Synthesis of Monomer B1)

Note that monomer (B1) was synthesized as follows.

Anhydrous magnesium sulfate ($MgSO_4$) 4.21 g (5 mmol) and pinacol 4.14 g (35 mmol) were added with 175 mL of diethyl ether, and to the resulting cloudy solution obtained by stirring, 4-vinylphenylboronic acid (VPBA, 5.18 g (35 mmol)) was added and stirred at room temperature for 19 hours. The solution obtained by filtration was distilled off, and purified by silica gel chromatography (eluent: hexane/ethyl acetate 20/1 (volume ratio)) to obtain the target monomer (B1) in a yield of 92.1%.

(Examples 11 to 17)

Each component was blended in the composition described in Table 3, and the electrolyte compositions of Examples 11 to 17 were produced by the above method, and various measurements were performed.

[Table 3]

| | Resin Component | | | Organic Solvent | | Film-Forming Additive | | Alkali Metal Salt | | Maximum DC Current Density ($mA/cm^2$) | Voltage (V) | Transference Number |
|---|---|---|---|---|---|---|---|---|---|---|---|---|
| | Copolymer | | PVDF-HFP | Type | Content (parts by mass) | Type | Content (parts by mass) | Type | Content (parts by mole) | | | |
| | Type | Content (parts by mass) | Content (parts by mass) | | | | | | | | | |
| Example 11 | Copolymer 1 | 100 | 50 | EC:PC[1)] | 285 | FEC | 15 | LiTFSI | 50 | 1.2 | 0.5 | 0.79 |
| Example 12 | | | | | | | | | 75 | 2.0 | 0.3 | 0.78 |
| Example 13 | | | | | | | | | 125 | 2.0 | 0.5 | 0.86 |
| Example 14 | | | | | | | | | 150 | 3.2 | 0.4 | 0.91 |
| Example 15 | Copolymer 2 | | | | | | | | 25 | 1.6 | 0.8 | - |
| Example 16 | Copolymer 3 | | | | | | | | 25 | 3.2 | 1.3 | 0.61 |
| Example 17 | Copolymer 4 | | | | | | | | 150 | 3.4 | 0.4 | 0.77 |

1) Mixed solvent containing EC and PC in a volume ratio of 50:50

<Method for Synthesizing Copolymer 5>

The lithiated carboxyl group-containing copolymer of Example 1 was produced by the following method.

Saccharin methacrylamide (SacM) (1.8848 g, 7.5 mmol), styrene (St) (0.86 mL, 7.5 mmol), tetralin (0.15 mL), and azobisisobutyronitrile (24.7 mg, 0.15 mmol) were dissolved in a mixed solvent of dioxane and acetonitrile (dioxane:acetonitrile = 1:1 (volume ratio)) (12.1 mL), and stirred at 60°C for 24 hours to obtain a solution of a copolymer of saccharin methacrylamide and styrene (raw material copolymer).

Next, to the obtained polymerization solution, a 25 mM phenothiazine 1,4-dioxane solution (45.0 mL, 1.13 mmol) and 100 equivalents of water were added and stirred overnight. As a result, the structural unit derived from saccharin methacrylamide in the raw material copolymer was hydrolyzed, the amide bond including the saccharin moiety was converted to a -COOH group (that is, the structural unit derived from saccharin methacrylamide was converted to a methacrylic acid (MAA) unit), and a -COOH group-containing copolymer was obtained (0.61 g).

The composition ratio of the structural units in the polymer was MAA:St = 48:52 (molar ratio). The composition ratio was calculated by dissolving the polymer in deuterated dimethyl sulfoxide and measuring the $^1$H-NMR spectrum.

Then, the -COOH group-containing copolymer (0.61 g, 3.21 mmol) was dissolved in dimethylformamide (12 mL) to obtain a solution. To the solution, 2.5 equivalents of LiOH (449.1 mg, 18.82 mmol) with respect to the amount of SacM initially charged when producing the raw material copolymer was added, and stirred at room temperature (25°C) for 3 days. As a result, a copolymer in which the - COOH group of the -COOH group-containing copolymer was converted to -COOLi (lithiated carboxyl group-containing copolymer) was obtained (0.43 g).

(Examples 18 to 24, Comparative Examples 4 and 5)

Each component was blended in the composition described in Table 4 and Table 5, and an electrolyte composition was produced by the above method, and various measurements were performed.

[Table 4]

<table>
<tr><td rowspan="3"></td><td colspan="3">Resin Component</td><td colspan="4">Additive</td><td rowspan="2">LiTFSI</td><td rowspan="2">Maximum DC Current Density</td><td rowspan="2">Voltage</td></tr>
<tr><td colspan="2">Copolymer</td><td>PVDF-HFP</td><td colspan="2">Anion Receptor</td><td colspan="2">Organic Solvent and Film-Forming Additive</td></tr>
<tr><td>Type</td><td>parts by mass</td><td>parts by mass</td><td>Type</td><td>[mol%]</td><td>Type (% by mass) 2)</td><td>[parts by mass]</td><td>[mol%]</td><td>[mA/cm$^2$]</td><td>[V]</td></tr>
<tr><td>Comparative Example 6</td><td rowspan="4">Copolymer 5</td><td rowspan="4">100</td><td rowspan="4">50</td><td>-</td><td>0</td><td rowspan="2">TEP:50<br>ECPC:50</td><td>300</td><td>0</td><td>0.3</td><td>2.0 3)</td></tr>
<tr><td>Comparative Example 7</td><td>TFB</td><td>100</td><td>300</td><td>0</td><td>0.5</td><td>2.0 3)</td></tr>
<tr><td>Example 18</td><td>TFB</td><td>100</td><td>FEC:5<br>TEP:47.5<br>ECPC:47.5</td><td>450</td><td>100</td><td>0.8</td><td>0.5</td></tr>
<tr><td>Example 19</td><td>-</td><td>0</td><td>FEC:5<br>TEP:47.5<br>ECPC:47.5</td><td>300</td><td>100</td><td>1.6</td><td>0.7</td></tr>
<tr><td colspan="11">1) ECPC is a mixed solvent containing EC and PC in a volume ratio of 50:50.<br>2) Ratio (% by mass) of each component to the total amount of the organic solvent and the film-forming additive.<br>3) The accurate value could not be measured because the voltage value exceeded the maximum value (2.0 V) of the measurement range.</td></tr>
</table>

[Table 5]

| | Resin Component | Organic Solvent 1) | | Film-Forming Additive | | Alkali Metal Salt | | Maximum DC Current Density ($mA/cm^2$) | Voltage (V) |
|---|---|---|---|---|---|---|---|---|---|
| | | ECPC | FDMA | Type | Content (parts by mass) | Type | Content (parts by mole) | | |
| Example 20 | MI-St/PVDF-HFP=66/34 (mass ratio) | 0 | 100 | FEC | 100 | LiTFSI | 50 | 1.6 | 0.5 |
| Example 21 | | 160 | 20 | FEC | 20 | LiTFSI | 75 | 1.8 | 0.6 |
| Example 22 | | 140 | 30 | FEC | 30 | LiTFSI | 125 | 1.4 | 1.5 |
| Example 23 | | 100 | 50 | FEC | 50 | LiTFSI | 150 | 1.4 | 1.0 |
| Example 24 | | 50 | 75 | FEC | 75 | LiTFSI | 150 | 1.2 | 0.7 |
| 1) ECPC is a mixed solvent containing EC and PC in a volume ratio of 50:50. The contents of ECPC and FDMA are contents with respect to 100 parts by mass of the resin component. | | | | | | | | | |

## Claims

**1.** An electrolyte composition, comprising: a polymer having an ability to preferentially conduct alkali metal ions; an alkali metal salt; a film-forming additive; and an organic solvent.

**2.** The electrolyte composition according to claim 1, wherein a transference number of the alkali metal ions is 0.5 or more.

**3.** The electrolyte composition according to claim 1 or 2, wherein the alkali metal salt is a lithium salt and/or a sodium salt.

**4.** The electrolyte composition according to claim 1 or 2, wherein the organic solvent is one or more solvents selected from the group consisting of a carbonate-based solvent, an ether-based solvent, a fluorine-based solvent, a nitrile-based solvent, a lactone-based solvent, a phosphate ester-based solvent, and a sulfone-based solvent.

**5.** The electrolyte composition according to claim 1 or 2, wherein the polymer having an ability to preferentially conduct alkali metal ions includes one or more groups selected from the group consisting of an alkali-metallized sulfonylimide group, an alkali-metallized sulfonic acid group, an alkali-metallized carboxylic acid group, and an alkali-metallized phenolic hydroxyl group.

**6.** A battery, comprising the electrolyte composition according to claim 1 or 2.

Fig.1

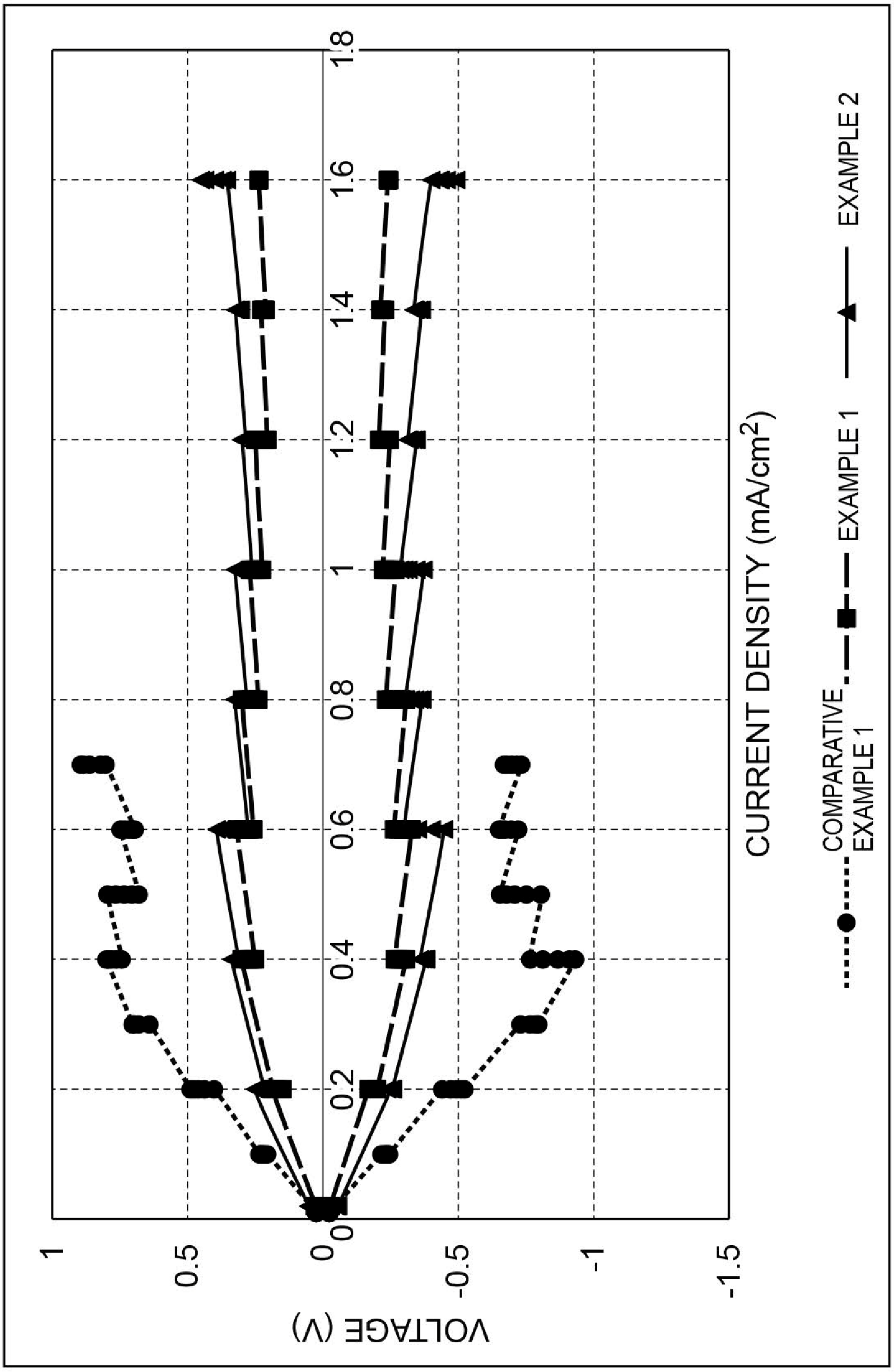
VOLTAGE (V)
1
0.5
0
-0.5
-1
-1.5
0
0.2
0.4
0.6
0.8
1
1.2
1.4
1.6
1.8
CURRENT DENSITY (mA/cm2)
COMPARATIVE EXAMPLE 1
EXAMPLE 1
EXAMPLE 2

## INTERNATIONAL SEARCH REPORT

International application No.
**PCT/JP2024/032246**

### A. CLASSIFICATION OF SUBJECT MATTER

***H01M 10/0565***(2010.01)i; ***H01G 11/56***(2013.01)i; ***H01G 11/60***(2013.01)i; ***H01G 11/62***(2013.01)i; ***H01M 6/18***(2006.01)i; ***H01M 10/052***(2010.01)i; ***H01M 10/054***(2010.01)i
FI: H01M10/0565; H01M10/052; H01M10/054; H01G11/56; H01G11/60; H01G11/62; H01M6/18 E

According to International Patent Classification (IPC) or to both national classification and IPC

### B. FIELDS SEARCHED

Minimum documentation searched (classification system followed by classification symbols)

H01M10/05-10/0587; H01G11/00-11/86; H01M6/00-6/18; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 00/01026 A1 (SANYO ELECTRIC CO., LTD.) 06 January 2000 (2000-01-06) p. 2, lines 3-14, p. 3, line 9-21, p. 5, lines 2-5, examples 1-6, 16-21 | 1-6 |
| Y | CN 108878777 A (INTERGRATED POWER TECHNOLOGY CO., LTD.) 23 November 2018 (2018-11-23) paragraphs [0028]-[0030] | 1-6 |
| Y | JP 2014-529863 A (UNIVERSITE D'AIX-MARSEILLE) 13 November 2014 (2014-11-13) paragraphs [0017]-[0020], [0023]-[0024] | 1-6 |
| Y | JP 2000-508678 A (HYDRO-QUEBEC) 11 July 2000 (2000-07-11) p. 23, lines 14-18, p. 32, lines 3-17, p. 33, lines 22-23, example 19 | 1-6 |
| Y | JP 2007-335406 A (MATSUSHITA ELECTRIC INDUSTRIAL CO., LTD.) 27 December 2007 (2007-12-27) paragraphs [0046]-[0058] | 1-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/032246**

**C. DOCUMENTS CONSIDERED TO BE RELEVANT**

| Category* | Citation of document, with indication, where appropriate, of the relevant passages | Relevant to claim No. |
|---|---|---|
| A | JP 2019-513283 A (BLUE SOLUTIONS) 23 May 2019 (2019-05-23) paragraphs [0016]-[0035] | 1-6 |

Form PCT/ISA/210 (second sheet) (July 2022)

**INTERNATIONAL SEARCH REPORT**
**Information on patent family members**

International application No.
**PCT/JP2024/032246**

| Patent document cited in search report | Publication date (day/month/year) | Patent family member(s) | Publication date (day/month/year) |
|---|---|---|---|
| WO 00/01026 A1 | 06 January 2000 | US 6444369 B1<br>column 1, lines 46-62, column 2, lines 28-42, column 3, lines 23-35, examples 1-8, 16-21<br>EP 1098383 A1<br>CA 2334240 A1<br>KR 10-2001-0052591 A | |
| CN 108878777 A | 23 November 2018 | (Family: none) | |
| JP 2014-529863 A | 13 November 2014 | US 2014/0272600 A1<br>paragraphs [0015]-[0018], [0021]-[0023]<br>WO 2013/034848 A1<br>EP 2753656 A1<br>FR 2979630 A1<br>CA 2846267 A1<br>KR 10-2014-0061501 A | |
| JP 2000-508678 A | 11 July 2000 | US 6319428 B1<br>column 5, lines 56-62, column 11, lines 6-21, column 11, lines 64-65, example 19<br>WO 1998/029388 A1<br>EP 850920 B1<br>CA 2248303 A1 | |
| JP 2007-335406 A | 27 December 2007 | US 2009/0246641 A1<br>paragraphs [0060]-[0075]<br>WO 2007/135974 A1<br>KR 10-2008-0080163 A<br>CN 101371396 A | |
| JP 2019-513283 A | 23 May 2019 | US 2019/0088997 A1<br>paragraphs [0026]-[0042]<br>WO 2017/158310 A1<br>EP 3430660 B1<br>FR 3049114 A1<br>CA 3018099 A1<br>KR 10-2018-0126532 A<br>CN 109075338 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007125845 A
- JP 2021088695 A
- US 6022643 A
- US 5705689 A
- US 6120941 A